# EUROPÄISCHE PATENTSCHRIFT

(11) **EP 0 536 084 B1**
(45) Veröffentlichungstag und Bekanntmachung des Hinweises auf die Patenterteilung: **24.04.1996**
(21) Anmeldenummer: 92810724.2
(22) Anmeldetag: 22.09.1992
(51) Int. Cl.: F16B 13/12, B29C 45/26, F16B 13/14

(54) **Kunststoff-Spreizdübel**
Plastic dowel
Cheville en matière plastique

(30) Priorität: 01.10.1991 DE 4132617
(43) Veröffentlichungstag der Anmeldung: 07.04.1993
(73) Patentinhaber: HILTI Aktiengesellschaft, FL-9494 Schaan (LI)
(72) Erfinder: Bisping, Heinz, W-8900 Augsburg (DE); Popp, Franz, W-8938 Buchloe (DE)
(74) Vertreter: Wildi, Roland

(56) Entgegenhaltungen:
- EP-A- 0 163 604
- GB-A- 1 296 660
- GB-A- 2 171 481

## Beschreibung

Die Erfindung betrifft einen Kunststoff-Spreizdübel mit einem im wesentlichen zylindrischen Dübelkörper, der in seiner Längsrichtung wenigstens teilweise von einer einen ovalen Querschnitt aufweisenden Zentralbohrung durchsetzt ist.

Der aus der DE-A-1 901 533 bekannte Spreizdübel ist mit einer, einen ovalen Querschnitt aufweisenden Zentralbohrung versehen, wobei sich die am Spreizdübel angeordneten Längsschlitze einander gegenüberliegend an der schwächsten Stelle des verbleibenden Wandungsquerschnitts befinden.

Weiters ist aus der WO-P-8 402 961 ein Spreizdübel mit geschlitzter Spreizhülse bekannt, deren Zentralbohrung eine ebenfalls im wesentlichen ovale Form aufweist und die Längsschlitze einander gegenüberliegend an der stärksten Stelle des verbleibenden Wandungsquerschnitts angeordnet sind.

Aus der EP-A-0 163 604 ist ein Spreizdübel mit einem zylindrischen Dübelkörper, bekannt, der von einer Zentralbohrung mit einem annähernd rechteckigen Querschnitt, dessen kurze Seiten nach aussen gekrümmt sind, durchsetzt ist. Auf zwei einander gegenüberliegenden Seiten des Dübelkörpers sind Durchtrittsöffnungen angeordnet, die rechtwinklig zur Längsseite der rechteckigen Zentralbohrung verlaufen.

Beim Spritzgiessen dieser Kunststoff-Spreizdübel erfolgt die Gestaltung der Zentralbohrung mittels einer Kernnadel, die grundsätzlich nur von einer Seite her in das Spritzwerkzeug hineinragt. Besonders bei sehr langen Kernnadeln können diese durch das einzuspritzende Material seitlich ausweichen, so dass eine zur Dübelspitze hin schräg verlaufende Zentralbohrung entsteht. Dies hat zur Folge, dass das Spreizelement in Form einer Schraube oder eines Nagels beim Eintreiben der schrägen Zentralbohrung folgt und letztendlich seitlich aus dem Spreizdübel austritt.

Der Erfindung liegt die Aufgabe zugrunde, einen Spreizdübel zu schaffen, bei dem ein seitliches Ausweichen der Kernnadel während des Spritzvorganges verhindert wird, so dass keine schräg verlaufende Kernbohrung im Spreizdübel entsteht.

Erfindungsgemäss wird dies dadurch erreicht, dass der Querschnitt der Zentralbohrung oval ist, dass in wenigstens einer Querschnittsebene auf einer Seite zwei sich paarweise gegenüberliegende Durchtrittsöffnungen und auf der gegenüberliegenden Seite wenigstens eine Durchtrittsöffnung angeordnet sind, und dass die Durchtrittsöffnungen rechtwinklig zum grössten Durchmesser der ovalen Zentralbohrung verlaufen.

Durch die erfindungsgemässe Anzahl und Anordnung der Durchtrittsöffnungen am Dübelkörper ist es möglich, das Spritzgiesswerkzeug derartig auszubilden, dass eine Zentrierung der Kernnadel mit Hilfe der radial in das Spritzgiesswerkzeug hineinragenden Kerne für die Durchtrittsöffnungen erfolgen kann.

Vorzugsweise zeichnet sich der Kunststoff-Spreizdübel dadurch aus, dass der Dübelkörper vier Durchtrittsöffnungen aufweist. Durch die erforderlichen vier Kerne für die Durchtrittsöffnungen im Spritzgiesswerkzeug kann eine noch genauere Zentrierung der Kernnadel erreicht werden. Die einzelnen Kerne müssen bezüglich der Länge exakt aufeinander abgestimmt sein, damit alle Kerne gleichzeitig am Umfang der ovalen Kernnadel anliegen.

Es gibt verschiedene Möglichkeiten, die Durchtrittsöffnungen am Umfang des Dübelkörpers anzuordnen. In der Regel werden die Durchtrittsöffnungen so angeordnet sein, dass sich jeweils zwei Durchtrittsöffnungen gegenüberliegen. Es ist auch möglich, dass auf einer Seite drei und auf der gegenüberliegende Seite eine Durchtrittsöffnung angeordnet sind.

Zweckmässigerweise sind die Durchtrittsöffnungen in Längsrichtung verlaufende Längsschlitze. Die der Zentrierung der Kernnadel dienenden Kerne besitzen einen im wesentlichen rechteckigen Querschnitt und weisen in axialer Richtung verlaufende Anschlagflächen auf.

Durch die grössere gegenüber der punktförmigen im wesentlichen rechteckig ausgebildeten Anschlagflächen kann auf die Kerne eine grössere Kraft übertragen werden. Die Kernnadel wird somit auch bei grösseren Spritzdrücken sicher gehalten.

In besonderen Fällen kann die Anschlagfläche der Kerne an die Umfangskontur der ovalen Kernnadel angepasst sein.

Die Form der Kerne entspricht im wesentlichen der Form des Längsschlitzes, unabhängig davon in welcher Form sich die Schlitze in axialer Richtung erstrecken.

Bei der Anordnung der Längsschlitze am Umfang des Dübelkörpers muss eine im wesentlichen gleichmässige Verteilung der Kerne gewährleistet sein.

Zweckmässigerweise sind in Längsrichtung mehrere Längsschlitze hintereinander angeordnet, die sich zur Bildung von Durchtrittsöffnungen in der gemeinsamen Querschnittebene überlappen. Derartig angeordnete Längsschlitze sind im wesentlichen am Umfang gleichmässig verteilt angeordnet. Durch die unterschiedliche axiale Lage dieser Längsschlitze wird ein längerer Spreizbereich erzielt.

Zweckmässigerweise sind die Durchtrittsöffnungen in der gemeinsamen Querschnittsebene sich paarweise gegenüberliegend angeordnet und verlaufen rechtwinklig zum grössten Durchmesser der ovalen Zentralbohrung. Liegen jeweils zwei in Längsrichtung hintereinander angeordnete Längsschlitze zwei weiteren ebenfalls in Längsrichtung hintereinander angeordneten Schlitzen gegenüber, so ermöglicht dies einen einfachen Aufbau des Spritzgiesswerkzeuges. Jeweils zwei hintereinander angeordnete Kerne für die Längsschlitze können mit einem an dem Spritzgiesswerkzeug angeordneten Zylinder in radialer Richtung bewegt werden. Dabei gelangen die Kerne an den Umfang der Kernnadel.

Ein anders ausgebildeter Dübelkörper weist drei am Umfang im wesentlichen gleichmässig verteilt angeordnete, in einer gemeinsamen Querschnittsebene liegende Durchtrittsöffnungen auf, die im wesentlichen zum Zentrum des Dübelkörpers gerichtet sind.

Ein weiterer Dübelkörper weist vier im wesentlichen in Längsrichtung verlaufende Durchtrittsöffnungen auf, wobei zwei Durchtrittsöffnungen im Bereich der schwächsten Stelle und zwei Druchtrittsöffnungen im Bereich der stärksten Stelle des verbleibenden Wandungsquerschnittes angeordnet sind. Auf diese Art können die einzelnen nicht dargestellten Kerne des Spritzgiesswerkzeuges jeweils um 90° zueinander versetzt angeordnet werden.

Bei einem weiteren Dübelkörper sind in der gemeinsamen Querschnittsebene vier Durchtrittsöffnungen angeordnet, wobei auf einer Querschnittshälfte des Dübelkörpers drei Durchtrittsöffnungen und auf der gegenüberliegenden Querschnittshälfte eine Durchtrittsöffnung angeordnet ist. Die Durchtrittsöffnungen können in axialer Richtung zueinander versetzt angeordnet sein, wobei die axiale Versetzung der Steigung eines Gewindes ähnlich ist. Wenigstens teilweise liegen dabei die Durchtrittsöffnungen in der gemeinsamen Querschnittsebene.

Die Erfindung wird nachstehend anhand einer Zeichnung, die ein Ausführungsbeispiel wiedergibt, näher erläutert. Es zeigen:
- Fig. 1: einen Dübelkörper mit S-förmigen, hintereinander angeordneten Längsschlitzen, die in axialer sowie in Umfangrichtung zueinander versetzt sind;
- Fig. 2: eine vergrösserte Darstellung des Schnittes längs der Linie II-II durch den Dübelkörper gemäss Fig. 1.

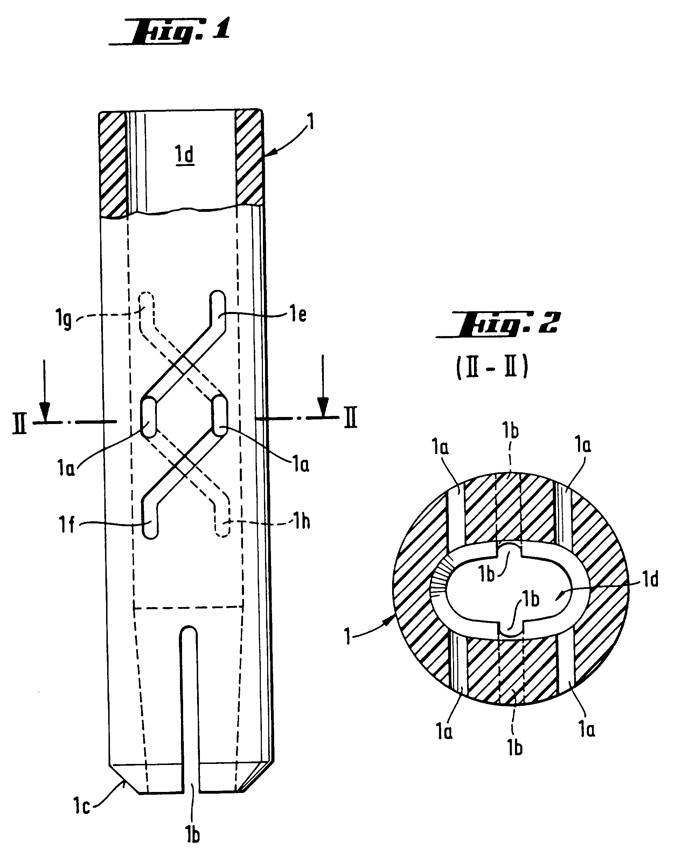

Die Fig. 1 und 2 stellen einen Dübelkörper 1 mit einer oval ausgebildeten Zentralbohrung 1d dar.

Ein Ende des Dübelkörpers 1 weist eine umlaufend ausgebildete Anfasung 1c auf, die dem besseren Zentrieren bzw. Einschieben des Dübelkörpers 1 in eine nicht dargestellte, vorbereitete Bohrung in einem Aufnahmematerial dient. Vom gleichen Ende des Dübelkörpers 1 erstreckt sich ein offener Schlitz 1b in axialer Richtung über wenigstens einen Teil der Länge des Dübelkörpers 1. Dieser offene Schlitz 1b, bewirkt ein besseres Spreizverhalten im Bereich des Bohrlochgrundes.

Die Zentralbohrung ld verjüngt sich zum Ende des Dübelkörpers 1, an welchem der offene Schlitz 1b angeordnet ist.

Der Dübelkörper 1 weist Durchtrittsöffnungen 1a in Form von Bohrungen oder Längsschlitzen 1e, 1f, 1g, 1h auf. In der gemeinsamen Querschnittebene der Durchtrittsöffnungen la können mehrere nicht dargestellte Kerne von aussen in das Spritzgiesswerkzeug hineinragen und die Kernnadel für die Zentralbohrung 1d zentrieren.

Die in Fig. 1 dargestellten Durchtrittsöffnungen la werden von insgesamt vier am Umfang des Dübelkörpers 1 angeordneten Längsschlitzen 1e, 1f, 1g, 1h gebildet. Je zwei in Längsrichtung hintereinander angeordnete, ein Paar bildende Längsschlitze 1e, 1f, 1g, 1h liegen sich gegenüber. Die beiden Paare sind in Längsrichtung derart hintereinander angeordnet, dass sich die Längsschlitze 1e, 1f, 1g, 1h in Längsrichtung teilweise überlappen und somit Durchtrittsöffnungen 1a bilden, die in einer gemeinsamen Querschnittebene liegen. Die Längsschlitze 1e, 1f, 1g, 1h gleichen einem invers dargestellten "S".

Abhängig vom Durchmesser des Dübelkörpers 1 können auch mehrere, in einer gemeinsamen Querschnittebene angeordnete Durchttrittsöffnungen la am Dübelkörper 1 angeordnet sein. Dadurch kann mit mehreren Kernen ein exaktes Zentrieren einer langen Kernnadel gewährleistet werden.

Abhängig von der Länge des Dübelkörpers 1 kann der Dübelkörper 1 auch mehrere Querschnittsebenen aufweisen.

Der in Fig. 2 dargestellte Querschnitt des Dübelkörpers 1 zeigt vier in der gemeinsamen Querschnittsebene liegende Durchtrittsöffnungen 1a. Die Durchtrittsöffnungen 1a liegen sich paarweise gegenüber. Die Zentralbohrung 1d ist oval ausgebildet und verjüngt sich zu dem Ende hin, an dem der in axialer Richtung verlaufende, offene Schlitz 1b angeordnet ist.

## Patentansprüche

1. Kunststoff-Spreizdübel mit einem im wesentlichen zylindrischen Dübelkörper (1) der in seiner Längsrichtung wenigstens teilweise von einer Zentralbohrung (1d) durchsetzt ist und in seinem, von der Zentralbohrung (1d) durchsetzten Bereich auf wenigstens einer gemeinsamen Querschnittebene, auf zwei gegenüberliegenden Seiten wenigstens eine vom Umfang ausgehende, sich zur Zentralbohrung (1d) erstreckende Durchtrittsöffnung (1a) aufweist, dadurch gekennzeichnet, dass der Querschnitt der Zentralbohrung (1d) oval ist, dass in wenigstens einer Querschnittsebene auf einer Seite zwei sich paarweise nebeneinanderliegende Durchtrittsöffnungen (1a) und auf der gegenüberliegenden Seite wenigstens eine Durchtrittsöffnung (1a) angeordnet sind, und dass die Durchtrittsöffnungen (1a) rechtwinklig zum grössten Durchmesser der ovalen Zentralbohrung (1d) verlaufen.

2. Spreizdübel nach Anspruch 1, dadurch gekennzeichnet, dass der Dübelkörper (1) vier Durchtrittsöffnungen (1a) aufweist.

3. Spreizdübel nach Anspruch 1 oder 2, dadurch gekennzeichnet, dass die Durchtrittsöffnungen (1a) in Längsrichtung verlaufende Längsschlitze sind.

4. Spreizdübel nach Anspruch 3, dadurch gekennzeichnet, dass in Längsrichtung mehrere Längsschlitze hintereinander angeordnet sind, die sich zur Bildung von Durchtrittsöffnungen (1a) in der gemeinsamen Querschnittsebene überlappen.

5. Spreizdübel nach Anspruch 4, dadurch gekennzeichnet, dass die Durchtrittsöffnungen (1a) in der gemeinsamen Querschnittsebene sich paarweise gegenüberliegend angeordnet sind und rechtwinklig zum grössten Durchmesser der ovalen Zentralbohrung (1d) verlaufen.

## Claims

1. A plastic expansion anchor having a substantially cylindrical plug body (1), which is penetrated at least partially in its longitudinal direction by a central bore (1d), and which has at least one passageway opening (1a), which starts from the periphery and extends to the central bore (1d), on two opposite sides on at least one common cross-sectional plane in its region penetrated by the central bore (1d), **characterised in that** the cross-section of the central bore (1d) is oval, that two passageway openings (1a) are disposed side by side as a pair in at least one cross-sectional plane on one side and at least one passageway opening (1a) is disposed on the other side, and that the passageway openings (1a) run at right angles to the largest diameter of the central bore (1d).

2. An expansion anchor according to claim 1, characterised in that the plug body (1) has four passageway openings (1a).

3. An expansion anchor according to claim 1 or 2, characterised in that the passageway openings (1a) are longitudinal slots running in the longitudinal direction.

4. An expansion anchor according to claim 3, characterised in that a plurality of longitudinal slots, which overlap each other in order to form passageway openings (1a) in the common cross-sectional plane, are disposed one behind another in the longitudinal direction.

5. An expansion anchor according to claim 4, characterised in that the passageway openings (1a) are disposed opposite each other in pairs in the common cross-sectional plane and run at right angles to the largest diameter of the oval central bore (1d).

## Revendications

1. Cheville expansible en matière plastique, comprenant un corps de cheville essentiellement cylindrique (1) qui, dans sa direction longitudinale, est traversé au moins partiellement par un perçage central (1d) et, dans sa zone traversée par le perçage central (1d), comporte, sur au moins un plan transversal commun, sur deux côtés opposés, au moins un orifice de passage (1a) qui part de la périphérie et s'étend jusqu'au perçage central (1d), caractérisée en ce que la section transversale du perçage central (1d) est ovale, en ce que, dans au moins un plan transversal, il est prévu, sur un côté, deux orifices de passage (1a) disposés côte à côte par paire et, sur le côté opposé, au moins un orifice de passage (1a), et en ce que les orifices de passage (1a) sont perpendiculaires au plus grand diamètre du perçage central ovale (1d).

2. Cheville expansible selon la revendication 1, caractérisée en ce que le corps de cheville (1) comporte quatre orifices de passage (1a).

3. Cheville expansible selon la revendication 1 ou 2, caractérisée en ce que les orifices de passage (1a) sont des fentes longitudinales s'étendant dans la direction longitudinale.

4. Cheville expansible selon la revendication 3, caractérisée en ce qu'il est prévu, dans la direction longitudinale, plusieurs fentes longitudinales qui sont placées les unes derrière les autres et qui se chevauchent pour former des orifices de passage (1a) dans le plan transversal commun.

5. Cheville expansible selon la revendication 4, caractérisée en ce que les orifices de passage (1a) se font face par paires dans le plan transversal commun et sont perpendiculaires au plus grand diamètre du perçage central ovale (1d).
